# EUROPÄISCHE PATENTSCHRIFT

(11) **EP 1 313 276 B1**
(45) Veröffentlichungstag und Bekanntmachung des Hinweises auf die Patenterteilung: **09.07.2003**
(21) Anmeldenummer: 01440391.9
(22) Anmeldetag: 19.11.2001
(51) Int. Cl.: H04L 25/02

(54) **Auswahl der autokorrelationsfunktion der Störanteile in dem empfangenen Nachrichtensignal**
Selection of the autocorrelation function of the noise part of the received signal
Sélection de la fonction d'autocorrelation de la partie de bruit du signal reçu

(43) Veröffentlichungstag der Anmeldung: 21.05.2003
(73) Patentinhaber: ALCATEL, 75008 Paris (FR)
(72) Erfinder: Chizat, Romain, 70197 Stuttgart (DE)
(74) Vertreter: Schultenkämper, Johannes

(56) Entgegenhaltungen:
- WO-A-01/13537
- WO-A-01/61950

## Beschreibung

Mit der nachfolgend beschriebenen Erfindung wird ein Verfahren zum Empfang eines Nachrichtensignals, insbesondere eines Funksignals beschrieben, sowie ein nach dem Verfahren arbeitender Empfänger, eine damit ausgestattete Empfangsvorrichtung und ein damit ausgestattetes Nachrichtenübertragungssystem.

Die Erfindung geht von herkömmlichen Empfangsverfahren aus, bei denen im Empfänger das empfangene Nachrichtensignal einer Signalverarbeitung, insbesondere einer Signalentzerrung zugeführt wird. Um das empfangene Nachrichtensignal von Störungen zu befreien, ist es bekannt, auf Informationen zurückzugreifen, die aus den demodulierten Signalen der Nachbarkanäle gewonnen werden.

Beim Empfang von Nachrichtensignalen, insbesondere von Funksignalen, ist es besonders wichtig, das empfangene Nachrichtensignal von Störungen zu befreien, die etwa auf Grund von Rauschen, Interferenzen oder anderen störenden Einflüssen auftreten können. Es wäre nun wünschenswert, dass der Empfänger vorab, bevor er das empfangene Signal verarbeitet, Kenntnis über die Art der auftretenden Störungen hätte. Damit könnte die Signalverarbeitung, insbesondere die Entzerrung und Demodulation, des empfangenen Signals verbessert werden.

Aus der WO 01 61950 ist ein Verfahren bekannt, mit dem farbiges Rauschen in einem Übertragungskanal abgeschätzt wird. Für jeden Kommunikationsburst wird eine Abschätzung pro Kanal vorgenommen. Der Anteil des farbigen Rauschens kommt dabei durch Filterung oder durch Interferenzen mit anderen Kanälen. Die Abschätzung des Rauschfaktors erfolgt dabei iterativ, wobei durch Vergleich mit den besten Resultaten eine Annäherung an den optimalen Zustand erfolgt.

Daher ist es Aufgabe der Erfindung, ein Verfahren zum Empfang eines Nachrichtensignals und dafür geeignete Vorrichtungen vorzuschlagen, bei denen die Befreiung des Empfangssignals von auftretenden Störungen mittels einer vorab durchgeführten Erkennung zumindest des größten Störanteils erfolgt.

Gelöst wird diese Aufgabe durch ein Verfahren mit den Merkmalen nach Anspruch 1 sowie durch einen Empfänger zur Ausführung des Verfahrens, durch eine damit ausgestattete Empfangsvorrichtung und durch ein damit ausgestattetes Nachrichtenübertragungssystem mit den Merkmalen nach einem der nebengeordneten Ansprüche.

Demnach wird beim Empfang des Nachrichtensignals zunächst die Autokorrelationsfunktion der in dem empfangenen Signal enthaltenen Störanteile geschätzt. Danach wird die geschätzte Autokorrelationsfunktion mit vorgebbaren Muster-Autokorrelationsfunktionen verglichen und es wird diejenige Muster-Autokorrelationsfunktion gewählt, die am ehesten der geschätzten Autokorrelationsfunktion entspricht. Schließlich wird mittels der ausgewählten Muster-Autokorrelationsfunktion die weitere Signalverarbeitung des empfangenen Nachrichtensignals durchgeführt.

Durch diese Maßnahmen wird eine für die am stärksten auftretende Störung charakteristische, mustergültige Autokorrelationsfunktion gewählt. Mit anderen Worten: Es wird also für den am stärksten auftretenden Störanteil vorab eine passende Muster-Autokorrelationfunktion geschätzt, die den auf dem gestörten Übertragungskanal auftretenden dominanten Störertyp beschreibt und die dann der weiteren Signalverarbeitung zu Grunde gelegt werden kann. Die weitere Signalverarbeitung ist beispielsweise die Entzerrung des Nachrichtensignals, die dann an Hand der ausgewählten Muster-Funktion durchgeführt wird. Die Erfindung geht nämlich von der Erkenntnis aus, dass sehr häufig das Nachrichtensignal zu einem überwiegenden Teil nur von einer einzigen typischen Störung verfälscht wird und dass bei Kenntnis des Störertyps, der Empfang des Nachrichtensignals deutlich verbessert werden kann. Die vorgebbaren Muster-Autokorrelationsfunktionen charakterisieren dementsprechend verschiedene Störertypen, d.h. die in dem Nachrichtenübertragungssystem typischerweise auftretenden Störungen. Demnach kann man die vorgebbaren Muster-Autokorrelationsfunktionen auch als charakteristische Funktionen für die möglichen Störkandidaten bezeichnen, von denen die Funktion desjenigen Kandidaten ausgewählt wird, der den tatsächlichen Empfangsverhältnissen am ehesten entspricht.

Die Erfindung ist mit einem recht geringen rechnerischen Aufwand zu realisieren und zudem unabhängig von der verwendeten Modulationsart realisierbar. Das erfindungsgemäße Verfahren wird vorzugsweise eingesetzt nachdem die Kanalimpulsantwort des Nachrichtenübertragungskanals geschätzt wurde und bevor eine nachfolgende Entzerrung, insbesondere eine entscheidungs-rückgekoppelte Entzerrung (sogenannte "decision feedback equalization"), des Nachrichtensignals erfolgt.

Besonders vorteilhafte Ausgestaltungen der Erfindung ergeben sich aus den Unteransprüchen:

Demnach ist es für den Empfang eines Funksignals, insbesondere eines Mobilfunksignals, besonders vorteilhaft, wenn die Signalverarbeitung, die mittels der ausgewählten Muster-Autokorrelationsfunktion erfolgt, eine Schätzung der Kanalimpulsantwort und/oder eine Filterung und/oder eine rückgekoppelte Entzerrung des Funksignals umfasst. Das bedeutet, dass mittels der ausgewählten Muster-Autokorrelationsfunktion sowohl die Schätzung der Kanalimpulsantwort als auch eine Filterung und Entzerrung des Funksignals verbessert werden. Im Fall der Schätzung der Kanalimpulsantwort geschieht dies vorzugsweise durch eine Anpassung des Schätzintervalls (CIR length). Dazu werden die Schätzparameter, wie z.B. der Schwellwert, optimiert, so dass die besten Parameter für jeden Störertyp verwendet werden können. Wenn das System zum Beispiel so aufgebaut ist, dass einige Kanallängen mit einem bestimmten Störertyp verbunden sind (Im GSM-Funkmodell "Hilly Terrain", also im Modell für hügeliges Gelände, sind große Kanallänge zumeist mit Rauschen verbunden.), kann man die Schätzintervalllänge (CIR length) abhängig von dem Störertyp optimieren. Im Fall der Filterung wie auch im Fall der rückgekoppelten Entzerrung des Funksignales werden entsprechende Koeffizienten an die ermittelte und ausgewählte Muster-Autokorrelationsfunktion angepasst.

Außerdem ist es von Vorteil, wenn die vorgebbaren Muster-Autokorrelationsfunktionen solche Störungen beschreiben, die in typischen störungsbehafteten Funkkanalmodellen auftreten. In diesem Zusammenhang sind besonders Funkkanalmodelle, bei denen weißes Rauschen und/oder Nachbarkanalstörungen und/oder Gleichkanalstörungen auftreten, zu nennen. Für diese verschiedenen Fälle werden entsprechende Muster-Autokorrelationsfunktionen vorgegeben. Die anschließende Auswahl der am besten passenden Muster-Autokorrelationsfunktion wird durch die Anzahl der vorgegebenen

Funktionen beschränkt und ist demnach recht schnell auszuführen. Die Muster-Autokorrelationsfunktionen entsprechen hierbei den Spektren oder den Spektrendichtefunktionen (power spectral density) der verschiedenen Funkkanalstörsignale.

Es ist weiterhin von Vorteil, wenn als Kriterium bei der Auswahl der Muster-Autokorrelationsfunktion der Betrag der Kreuzkorrelation herangezogen wird, die zwischen den jeweiligen Muster-Autokorrelationsfunktionen und der geschätzten Autokorrelationsfunktion gebildet wird.

Zudem ist es von besonderem Vorteil, wenn das empfangene Nachrichtensignal eine Musterbitfolge (training sequence) enthält und wenn die Kanalimpulsantwort geschätzt wird mittels der Auswertung dieser empfangenen Musterbitfolge.

Die Erfindung und die sich daraus ergebenden Vorteile werden im folgenden näher beschrieben an Hand eines Ausführungsbeispiels und unter Zuhilfenahme der folgenden schematisch dargestellten Zeichnungen:
- Figur 1,: die das Ablaufdiagramm eines erfindungsgemäßen Verfahrens zeigt;
- Figur 2,: die schematisch den Aufbau eines erfindungsgemäßen Empfängers zeigt; und
- Figur 3,: die schematisch einige typische im Leistungsspektrum des Nachrichtensignals auftretende Störungen darstellt.

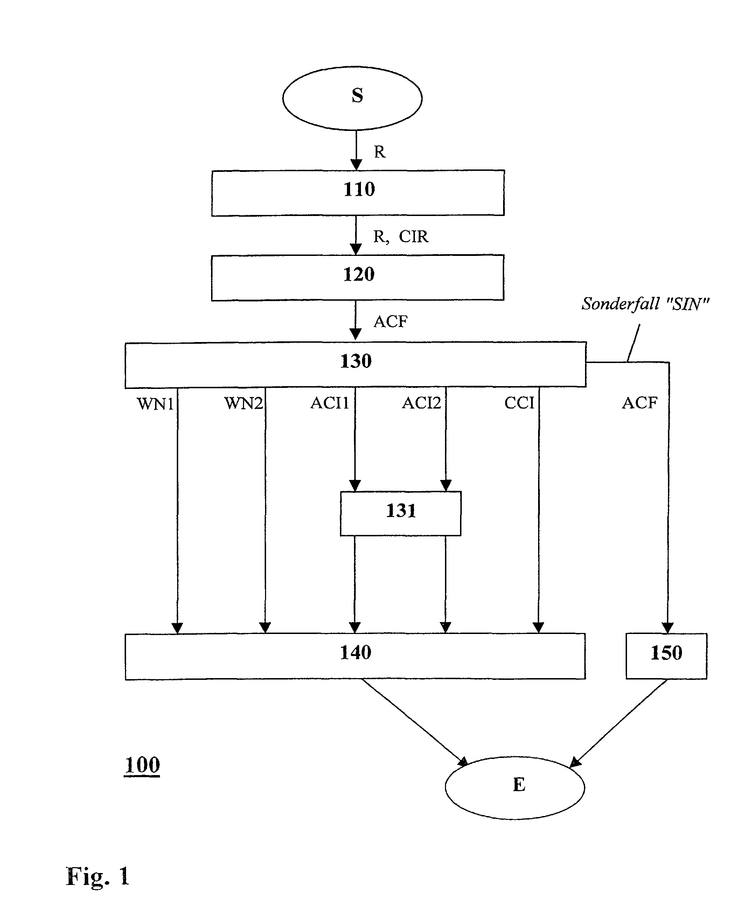

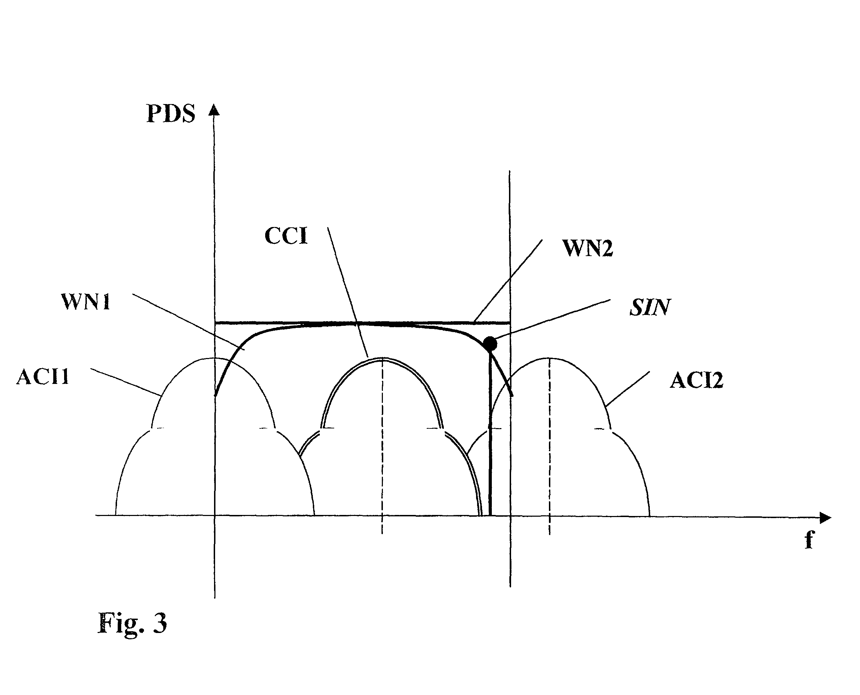

In der Figur 1 ist im Ablaufdiagramm ein Verfahren 100 dargestellt, das zum Empfang eines Nachrichtensignals dient. Nach Beginn des Verfahrens im Schritt S wird in einem ersten Schritt 110 eine Kanalschätzung CIR des empfangenen Nachrichtensignals R durchgeführt. Danach folgt in einem Schritt 120 die Schätzung der Autokorrelationsfunktion ACF für die Störanteile im empfangenen Nachrichtensignal R. Diese geschätzte Autokorrelationsfunktion ACF wird dann in einem nachfolgenden Schritt 130 verglichen mit verschiedenen Muster-Autokorrelationsfunktionen. In diesem Beispiel sind folgende fünf Muster-Funktionen vorgegeben (siehe dazu auch Fig. 3):

Die Muster-Autokorrelationsfunktion WN1 beschreibt eine Störung des Nachrichtenübertragungskanals durch ein gefiltertes weißes Rauschen (rosa Rauschen). Die Funktion WN2 beschreibt einen Fall, bei dem ein ideales weißes Rauschen auftritt, so wie es der Fall ist, wenn die im Schritt 110 erfolgte Kanalschätzung nicht korrekt durchgeführt werden konnte. Die Funktion ACI1 wiederum beschreibt die Situation, wo auf einem Nachbarkanal, hier auf dem linken Nachbarkanal, ein Nachbarsignal auftritt, das ein störendes Nebensprechen (adjacent-channel interference) verursacht. Die Funktion AC12 beschreibt eine entsprechende Störung auf dem rechten Nachbarkanal. Schließlich beschreibt die Funktion CCI eine Störung auf dem selben Kanal, über den das Nachrichtensignal übertragen wird (co-channel interference).

Sofern jedoch keiner der oben beschriebenen, typischen Störer entsprechend den Musterfunktionen WN1, WN2, ACI1, ACI2, CCI, als dominant erkannt wird, wird von einem Sonderfall ausgegangen, der beispielsweise durch eine störende Sinusfunktion SIN beschrieben werden kann. Es ist aber unerheblich den Sonderfall durch eine konkrete Funktion zu beschreiben. Vielmehr ist es wesentlich, dass der Sonderfall an sich festgestellt wird, das heißt, dass festgestellt wird, dass keine der üblichen Musterfunktionen die auftretende Störung genau genug beschreiben kann.

Das wird vorzugsweise anhand eines Schwellwertes (von z.B. 0,5) festgestellt, der die Ergebnisse aus den Kreuzkorrelationen selektiert. Sofern alle Ergebnisse unterhalb dieses Schwellwertes liegen, gibt es keine dominante Musterfunktion, die als bester Kandidat angesehen werden könnte.

In diesem Sonderfall wird dann nicht eine Musterfunktion, z.B. die Funktion ACI2, verwendet, sondern die tatsächlich geschätzte Autokorrelationsfunktion ACF.

Die verschiedenen einzelnen Muster-Autokorrelationsfunktionen, die die typischen Störursachen wiedergeben, sowie eine Sinusfunktion, die symbolisch den Sonderfall repräsentieren soll, sind in der Fig. 3 näher dargestellt:

Dort ist das Leistungsdichtespektrum PDS über der Frequenz f aufgetragen. In der Mitte des Bildes befindet sich der Bereich des Übertragungskanals mit dem Spektrum des zu übertragenden Nachrichtensignal (Nutzsignal). Die verschiedenen Störer befinden sich in unmittelbarer Nähe oder in demselben Bereich des Nutzsignals. Die zwei durch weißes oder gefiltertes weißes Rauschen gekennzeichneten Störer WN1 und WN2 überdecken vollständig den Bereich des Übertragungskanals. Der einzelne Störer SIN, der eine spezielle singuläre Störart als Sonderfall wiedergibt, tritt nur in einem sehr schmalen Bereich des Bandes auf. Schließlich sind noch die Störungen auf Grund von Nachbarkanälen gekennzeichnet durch die Funktionen ACI1 und ACI2, das heißt durch Übertragungsfunktionen, die sich zum Teil mit dem Nutzband überlagern und somit eine links- oder rechtsseitige Nachbarkanalstörung verursachen.

Je nach Art des auftretenden Störfalls wird nun das Verfahren (siehe Fig. 1) weitergeführt: Um den wahrscheinlich am stärksten auftretenden Störer zu identifizieren, wird die in dem Schritt 120 geschätzte Autokorrelationsfunktion ACF verglichen mit den verschiedenen Muster-Autokorrelationsfunktionen WN1, WN2, ACI1, ACI2, CCI. Der Vergleich erfolgt mittels der Bildung von Kreuzkorrelationsprodukten zwischen der geschätzten Autokorrelationsfunktion und diesen verschiedenen Musterfunktionen. Diejenige Musterfunktion, die der geschätzten Autokorrelationsfunktion am nächsten kommt, das heißt die am stärksten mit der geschätzten Autokorrelationsfunktion korreliert, wird im weiteren Verfahren verwendet.

Handelt es sich beispielsweise um eine Nachbarkanalstörung (adjacent channel interference), so wird die Musterfunktion ACI1 oder ACI2 verwendet, indem das empfangene Nachrichtensignal in einem Schritt 131 mittels dieser Musterfunktionen gefiltert wird. Erst danach erfolgt dann eine Entzerrung des Nachrichtensignals in einem Schritt 140. Liegt zum überwiegenden Teil eine andere Störungsart vor, so wird die entsprechende Musterfunktionen WN1, WN2 oder CCI verwendet, indem die Entzerrung des Nachrichtensignals dann mittels dieser Musterfunktion durchgeführt wird.

Ist jedoch durch Vergleich mit einem Schwellwert erkannt worden, dass keine der Musterfunktionen ausreichend stark mit der geschätzten Autokorrelationsfunktion übereinstimmt (korreliert), so liegt ein Sonderfall vor. Dieser könnte z.B. durch eine dominante Sinusstörung SIN auftreten. Sofern ein Sonderfall erkannt wird, wird nicht eine der Musterfunktionen ausgewählt, sondern es wird dann die tatsächlich geschätzte Autokorrelationsfunktion für die weitere Signalverarbeitung verwendet. Entsprechend diesem Beispiel erfolgt also in einem Schritt 150 eine Entzerrung des Nachrichtensignals mittels der tatsächlich geschätzten Autokorrelationsfunktion, die sich aus dem Schritt 120 ergab.

Zusammenfassend gesagt: Im Schritt 140 wird eine Entzerrung des Nachrichtensignals R durchgeführt mittels der jeweils ausgewählten Musterfunktion (z.B. mit WN2 oder mit der gefilterten ACI1); hingegen im Sonderfall gemäß dem Schritt 150 eine Entzerrung ausgeführt mit der tatsächlich geschätzten Autokorrelationsfunktion ACF. Das Verfahren endet schließlich mit dem Schritt E.

Die hier durchgeführte Entzerrung des empfangenen Nachrichtensignals erfolgt vorzugsweise in Form einer entscheidungs-rückgekoppelten Entzerrung (decision feedback equalization), bei der die verwendeten Koeffizienten mittels der ausgewählten Musterfunktion eingestellt werden. Im konkreten heißt dies, dass in der Entzerrerstufe die Koeffizienten des Vorwärtsfilters (forward filter), auch kurz "A-Filter" genannt, an die ermittelte Muster-Autokorrelationsfunktion angepasst werden.

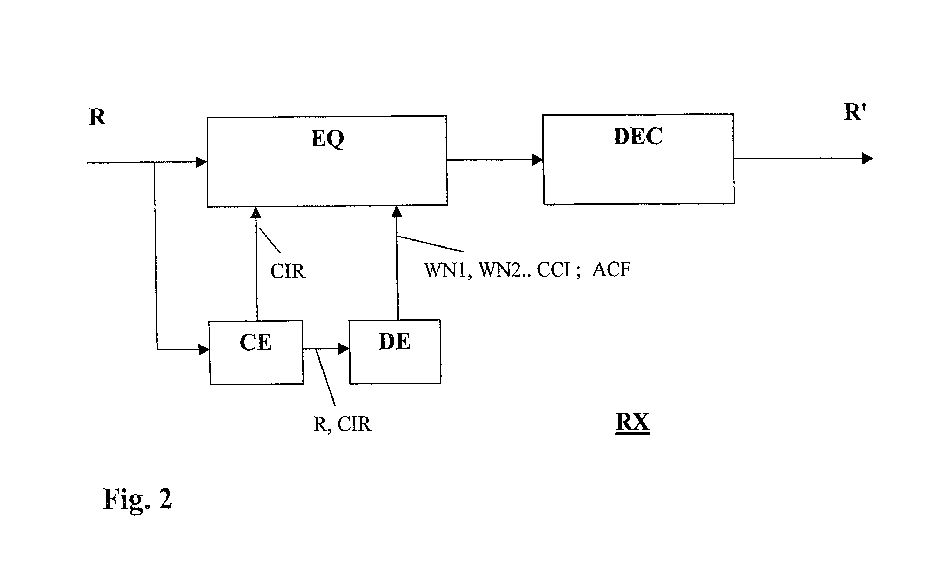

Die Figur 2 zeigt den prinzipiellen Aufbau eines erfindungsgemäßen Empfängers RX, der eine Entzerrstufe EQ und einen nachgeschalteten Dekodierer DEC sowie eine Kanalschätzungsstufe CE und eine Störschätzungsstufe DE enthält, die die Koeffizienten im Entzerrer EQ einstellen. Dazu wird das empfangene Nachrichtensignal R nicht nur an den Eingang des Entzerrers EQ angelegt, sondern auch an den Eingang der Kanalschätzstufe CE, der wiederum der Störschätzstufe DE nachgeschaltet ist. Die Kanalschätzstufe CE ermittelt die Kanalimpulsantwort und gibt dieses Ergebnis an den Entzerrer EQ weiter. Die Kanalimpulsantwort wird auch an die Störschätzstufe DE weiter gegeben, damit dort mit geringem Aufwand die Rauschunterdrückung durchgeführt werden kann.

Die Störungsschätzstufe DE ermittelt aus dem empfangenen Empfangssignal R die Autokorrelationsfunktion der Störanteile durch Schätzung und vergleicht diese Schätzung mit den vorgegebenen Musterautokorrelationsfunktionen. Die ausgewählte Musterkorrelationsfunktion, die den besten Kandidaten wiedergibt, wird zur Einstellung der Entzerrerkoeffizienten verwendet.

Die in der Stufe CE durchgeführte Schätzung der Kanalimpulsantwort erfolgt durch Auswertung einer Musterbitfolge (sogenannte training sequence), die in dem Empfangssignal R enthalten ist und die beispielsweise ein 26 Bit langes Muster enthält. Der in der Störerschätzstufe DE durchgeführte Prozess, enthält unter anderem die Bildung von Kreuzkorrelationsfunktionen, um festzustellen mit welcher der Muster-Autokorrelationsfunktionen die geschätzte Autokorrelationsfunktion am meisten übereinstimmt.

Die Erfindung ist also sowohl dazu geeignet, die Schätzung der Kanalimpulsantwort zu verbessern, als auch die Filterung und Entzerrung des empfangenen Nachrichtensignals selbst zu optimieren. Die Erfindung ist besonders geeignet zum Empfang von stark gestörten Nachrichtensignalen, wie sie besonders in Funkübertragungssystemen auftreten. In diesem Zusammenhang sind besonders Mobilfunksysteme, wie etwa das GSM (Global System for Mobile Communications) oder das UMTS (Universal Mobile Telecommunications System) zu nennen, bei denen verschiedenste Formen von Kanalstörungen auftreten können, die erfindungsgemäß jeweils durch eine entsprechende Muster-Autokorrelationsfunktion berücksichtigt werden. Daher ist es besonders vorteilhaft, die Erfindung in Mobilfunkempfänger zu implementieren, sowohl innerhalb der Funkfeststationen (base stations) als auch innerhalb der Mobilstationen, auch Mobilfunkendgeräte genannt (mobile terminals). Dementsprechend kann der beanspruchten Empfänger als Mobilfunkempfänger ausgebildet sein. Und die beanspruchte Empfangsvorrichtung kann als Funkfeststation oder auch als Mobilstation ausgebildet sein.

Die Anwendung der Erfindung ist auch nicht auf bestimmte Modulationsverfahren beschränkt; die Erfindung eignet sich aber besonders für digitale Modulationsverfahren, bei denen Musterbitfolgen (training sequences) verwendet werden. Versuche haben gezeigt, dass durch Einsatz der Erfindung sich der Signalrauschabstand im Empfangssignal um etwa 3 bis 4 dB verbessert. Im Zusammenhang mit der Übertragung von Mobilfunksignalen können Muster-Autokorrelationsfunktionen verwendet werden, die typische Situationen wiedergeben, wie beispielsweise Funkübertragung in ländlichen Gebieten, in hügeligem oder flachem Gelände, oder in innerstädtischen Bereichen. Damit können zur Vorgabe der Muster-Autokorrelationsfunktionen die verschiedensten Funkübertragungsmodelle herangezogen werden. Es hat sich gezeigt, dass in den allermeisten Fällen die Erfindung eine deutliche Verbesserung des Signalrauschabstandes bewirkt; sollte jedoch der Fall auftreten, dass keiner der vorgegebenen Muster-Autokorrelationsfunktionen eindeutig die auftretende Störung charakterisiert, das heißt dass keine eindeutige Störungsart erkannt werden kann, so ist es vorteilhaft, dass dann die tatsächlich geschätzte Autokorrelationsfunktion zur Optimierung der nachfolgenden Signalverarbeitung, insbesondere Entzerrung des Nachrichtensignals, herangezogen wird.

Neben dem beschriebenen Ausführungsbeispiel sind weitere Beispiele auf den verschiedensten Anwendungsgebieten denkbar, insbesondere auch im Bereich der breitbandigen und hochratigen Nachrichtenübertragung, wie etwa im Bereich der Richtfunkübertragung, der Satellitenfunkübertragung oder der optischen Nachrichtenübertragung.

## Patentansprüche

1. Verfahren (100) zum Empfang eines Nachrichtensignals (R), bei dem die Autokorrelationsfunktion (ACF) der in dem empfangenen Nachrichtensignal (R) enthaltenen Störanteile geschätzt wird (Schritt 120), bei dem die geschätzte Autokorrelationsfunktion (ACF) mit vorgebbaren Muster-Autokorrelationsfunktionen (WN1, WN2, ACI1, ACI2, CCI) verglichen wird und diejenige Muster-Autokorrelationsfunktion (WN2) gewählt wird, welche am ehesten der geschätzten Autokorrelationsfunktion (ACF) entspricht (Schritt 130), und bei dem eine Signalverarbeitung des empfangenen Nachrichtensignals (R) mittels der ausgewählten Muster-Autokorrelationsfunktionen (WN2) durchgeführt wird (Schritt 140).

2. Verfahren (100) nach Anspruch 1, bei dem das empfangene Nachrichtensignal ein Funksignal (R), insbesondere ein Mobilfunksignal ist, und bei dem die Signalverarbeitung des Funksignals (R) eine mittels der ausgewählten Muster-Autokorrelationsfunktionen (WN2) durchgeführte Schätzung der Kanalimpulsantwort (CIR) und/oder Filterung und/oder rückgekoppelte Entzerrung des Funksignals (R) umfasst.

3. Verfahren (100) nach Anspruch 1, bei dem die vorgebbaren Muster-Autokorrelationsfunktionen verschiedene Störungen beschreiben, die in störungsbehafteten Funkkanalmodellen auftreten, insbesondere Muster-Autokorrelationsfunktionen (WN1, WN2) für mit weißem Rauschen behafteten Funkkanalmodellen, Muster-Autokorrelationsfunktionen (ACI1, AC12) für mit Nachbarkanalstörungen behafteten Funkkanalmodellen oder Muster-Autokorrelationsfunktionen (CCI) für mit Gleichkanalstörungen behafteten Funkkanalmodellen.

4. Verfahren (100) nach Anspruch 1, bei dem diejenige Muster-Autokorrelationsfunktion (WN2) ausgewählt wird, deren Kreuzkorrelation mit der geschätzten Autokorrelationsfunktion (ACF) am größten ist (Schritt 130).

5. Verfahren (100) nach Anspruch 1, bei dem keine der Muster-Autokorrelationsfunktionen (WN1, WN2, ACI1, ACI2, CCI WN2) ausgewählt wird, wenn deren Kreuzkorrelationen mit der geschätzten Autokorrelationsfunktion (ACF) unterhalb eines vorgebbaren Schwellwertes liegen (Schritt 130, "SIN").

6. Verfahren (100) nach Anspruch 5, bei dem anstelle einer der Muster-Autokorrelationsfunktionen (WN1, WN2, ACI1, ACI2, CCI WN2) die geschätzte Autokorrelationsfunktion (ACF) ausgewählt wird (Schritt 130) und anschließend zur Signalverarbeitung des empfangenen Nachrichtensignals (R) verwendet wird (Schritt 150).

7. Verfahren (100) nach Anspruch 1, bei dem das empfangene Nachrichtensignal (R) eine Musterbitfolge enthält, und bei dem die Kanalimpulsantwort (CIR) geschätzt wird mittels Auswertung der empfangenen Musterbitfolge (Schritt 140).

8. Empfänger (RX) zum Empfang eines Nachrichtensignals (R), mit einer ersten Signalschätzungsstufe (CE), die die Autokorrelationsfunktion (ACF) der in dem empfangenen Nachrichtensignal (R) enthaltenen Störanteile schätzt, mit einer Vergleichs- und Auswahlstufe (DE), die die geschätzte Autokorrelationsfunktion (ACF) mit vorgebbaren Muster-Autokorrelationsfunktionen (WN1, WN2, ACI1, ACI2, CCI) vergleicht und diejenige Muster-Autokorrelationsfunktion (WN2) auswählt, welche am ehesten der geschätzten Autokorrelationsfunktion (ACF) entspricht, und mit mindestens einer Signalverarbeitungsstufe (EQ), die eine Signalverarbeitung des empfangenen Nachrichtensignal (R) mittels der ausgewählten Muster-Autokorrelationsfunktionen (WN2) durchführt.

9. Empfangsvorrichtung mit einem Empfänger (RX) nach Anspruch 8.

10. Nachrichtenübertragungssystem mit mindestens einer Empfangsvorrichtung nach Anspruch 9.

## Claims

1. Method (100) for receiving a message signal (R), in which the auto-correlation function (ACF) of the spurious components contained in the received message signal (R) is estimated (step 120), in which the estimated auto-correlation function (ACF) is compared with presettable sample auto-correlation functions (WN1, WN2, ACI1, ACI2, CCI) and the sample auto-correlation function (WN2) which most closely corresponds to the estimated auto-correlation function (ACF) is chosen (step 130), and in which signal processing of the received message signal (R) is carried out by means of the selected sample auto-correlation functions (WN2) (step 140).

2. Method (100) according to claim 1, in which the received message signal is a radio signal (R), in particular a mobile radio signal, and in which signal processing of the radio signal (R) comprises an estimation of the channel impulse response (CIR) carried out by means of the selected sample auto-correlation functions (WN2) and/or filtering and/or feedback equalisation of the radio signal (R).

3. Method (100) according to claim 1, in which the presettable sample auto-correlation functions describe various kinds of interference which occur in radio channel models afflicted with interference, in particular sample auto-correlation functions (WN1, WN2) for radio channel models afflicted with white noise, sample auto-correlation functions (ACI1, ACI2) for radio channel models afflicted with adjacent channel interference or sample auto-correlation functions (CCI) for radio channel models afflicted with co-channel interference.

4. Method (100) according to claim 1, in which the sample auto-correlation function (WN2), the cross-correlation of which with the estimated auto-correlation function (ACF) is the greatest, is selected (step 130).

5. Method (100) according to claim 1, in which none of the sample auto-correlation functions (WN1, WN2, ACI1, ACI2, CCI WN2) is selected if its cross-correlations with the estimated auto-correlation function (ACF) is below a presettable threshold value (step 130, "SIN").

6. Method (100) according to claim 5, in which, instead of one of the sample auto-correlation functions (WN1, WN2, ACI1, ACI2, CCI WN2), the estimated auto-correlation function (ACF) is selected (step 130) and then used for signal processing of the received message signal (R) (step 150).

7. Method (100) according to claim 1, in which the received message signal (R) contains a training sequence and in which the channel impulse response (CIR) is estimated by evaluating the received training sequence (step 140).

8. Receiver (RX) for receiving a message signal (R), with a first signal estimation stage (CE), which estimates the auto-correlation function (ACF) of the spurious components contained in the received message signal (R), with a comparison and selection stage (DE), which compares the estimated auto-correlation function (ACF) with presettable sample auto-correlation functions (WN1, WN2, ACI1, ACI2, CCI) and selects the sample auto-correlation function (WN2) which most closely corresponds to the estimated auto-correlation function (ACF), and with at least one signal processing stage (EQ) which carries out signal processing of the received message signal (R) by means of the selected sample auto-correlation functions (WN2).

9. Receiving device with a receiver (RX) according to claim 8.

10. Message transmission system with at least one receiving device according to claim 9.

## Revendications

1. Procédé (100) pour la réception d'un signal d'information (R), d'après lequel on évalue la fonction d'auto-corrélation (ACF) des composantes parasites contenues dans le signal d'information (R) reçu (étape 120), d'après lequel la fonction d'auto-corrélation (ACF) évaluée est comparée à des fonctions d'auto-corrélation modèles (WN1, WN2, ACI1, ACI2, CCI) pouvant être prescrites, et l'on sélectionne la fonction d'auto-corrélation modèle (WN2) qui correspond le mieux à la fonction d'auto-corrélation (ACF) évaluée (étape 130), et d'après lequel on effectue un traitement de signal du signal d'information (R) reçu, au moyen de la fonction d'auto-corrélation modèle (WN2) sélectionnée.

2. Procédé (100) selon la revendication 1, d'après lequel le signal d'information reçu est un signal de radiocommunications (R), notamment un signal de radiocommunications mobile, et d'après lequel le traitement de signal du signal de radiocommunications (R) comprend une évaluation de la réponse d'impulsion de canal (CIR) effectuée au moyen de la fonction d'auto-corrélation modèle (WN2) sélectionnée, et/ou un filtrage et/ou une correction de distorsion à rétroaction, du signal de radiocommunications (R).

3. Procédé (100) selon la revendication 1, d'après lequel les fonctions d'auto-corrélation modèles décrivent différentes perturbations parasites qui apparaissent dans des canaux radio modèles affectés de parasites, notamment des fonctions d'auto-corrélation modèles (WN1, WN2) pour des canaux radio modèles affectés de bruit blanc, des fonctions d'auto-corrélation modèles (ACI1, ACI2) pour des canaux radio modèles affectés de perturbations parasites d'interférence de canaux voisins, ou des fonctions d'auto-corrélation modèles (CCI) pour des canaux radio modèles affectés de parasites ou perturbations sur le même canal.

4. Procédé (100) selon la revendication 1, d'après lequel on sélectionne la fonction d'auto-corrélation modèle (WN2) dont la corrélation croisée avec la fonction d'auto-corrélation (ACF) évaluée est la plus grande (étape 130).

5. Procédé (100) selon la revendication 1, d'après lequel aucune des fonctions d'auto-corrélation modèles (WN1, WN2, ACI1, ACI2, CCI WN2) n'est sélectionnée si leurs corrélations croisées avec la fonction d'auto-corrélation (ACF) évaluée se situent en-dessous d'une valeur de seuil pouvant être prescrite (étape 130, "SIN").

6. Procédé (100) selon la revendication 5, d'après lequel à la place de l'une des fonctions d'auto-corrélation modèles (WN1, WN2, ACI1, ACI2, CCI WN2), on sélectionne la fonction d'auto-corrélation (ACF) évaluée (étape 130) et on l'utilise ensuite pour le traitement de signal du signal d'information (R) reçu (étape 150).

7. Procédé (100) selon la revendication 1, d'après lequel le signal d'information (R) reçu renferme une suite de bits modèle, et d'après lequel on évalue la réponse d'impulsion de canal (CIR) par l'exploitation de la suite de bits modèle reçue (étape 140).

8. Récepteur (RX) pour la réception d'un signal d'information (R), comprenant un premier étage d'évaluation de signal (CE), qui évalue la fonction d'auto-corrélation (ACF) des composantes parasites contenues dans le signal d'information (R) reçu, comprenant également un étage de comparaison et de sélection (DE), qui compare la fonction d'auto-corrélation (ACF) évaluée à des fonctions d'auto-corrélation modèles (WN1, WN2, ACI1, ACI2, CCI) et sélectionne la fonction d'auto-corrélation modèle (WN2) qui correspond le mieux à la fonction d'auto-corrélation (ACF) évaluée, et comprenant également au moins un étage de traitement de signal (EQ), qui effectue un traitement de signal du signal d'information (R) reçu, au moyen de la fonction d'auto-corrélation modèle (WN2) sélectionnée.

9. Dispositif de réception comprenant un récepteur (RX) selon la revendication 8.

10. Système de transmission d'informations comprenant au moins un dispositif de réception selon la revendication 9.
